Europäisches Patentamt

European Patent Office

Office européen des brevets

(11) Veröffentlichungsnummer : **0 018 661**
**B1**

(12) **EUROPÄISCHE PATENTSCHRIFT**

(45) Veröffentlichungstag der Patentschrift :
22.06.83

(21) Anmeldenummer : 80102440.7

(22) Anmeldetag : 05.05.80

(51) Int. Cl.³ : **B 63 J   2/08, B 63 J   2/12,**
**B 60 P   3/20, F 25 D 17/00**

(54) **Frachtschiff mit Decks und Kühlanlage, sowie Trailer hierfür.**

(30) Priorität : 05.05.79 DE 2918190

(43) Veröffentlichungstag der Anmeldung :
12.11.80 Patentblatt 80/23

(45) Bekanntmachung des Hinweises auf die Patenterteilung : 22.06.83 Patentblatt 83/25

(84) Benannte Vertragsstaaten :
AT BE FR GB IT NL SE

(56) Entgegenhaltungen :
DE A 2 757 891
FR A 1 491 384
FR A 2 393 724
GB A 1 158 826
GB A 1 164 791
US A 2 972 975
US A 3 359 752
US A 3 692 100
US A 4 003 728
« Shipping World and Shipbuilder », November
1969, Seiten 1593-1600

(73) Patentinhaber : G + H MONTAGE GmbH
Westendstrasse 17
D-6700 Ludwigshafen (DE)

(72) Erfinder : Thode, Herbert
Kastanienallee 22
D-2407 Bad Schwartau (DE)

(74) Vertreter : KUHNEN & WACKER Patentanwaltsbüro
Schneggstrasse 3-5 Postfach 1729
D-8050 Freising (DE)

Frachtschiff mit Decks und Kühlanlage, sowie Trailer hierfür

Die Erfindung betrifft ein Kühlgut-Transportsystem nach dem Oberbegriff des Anspruchs 1, sowie einen Trailer nach dem Oberbegriff des Anspruchs 2 und ein Frachtschiff nach dem Oberbegriff des Anspruchs 9 hierfür.

Zum Beladen von Frachtschiffen sind fahrbare Plattformen — sogenannte Trailer — bekannt, auf denen Stückgut und/oder Container aufgesetzt und auf die Decks des Schiffes eingefahren werden. Die Trailer werden verzurrt und bleiben beim Transport auf dem Schiff. Mit ihnen erfolgt das Be- und Entladen.

Mit derartigen Trailern können auch Container verladen werden, die jeder ein eigenes Kühlaggregat haben, sogenannte integrated units oder clip-on-Geräte.

Die Kühlgeräte können mit einem Verbrennungsmotor ausgerüstet sein. Das erfordert besondere Entlüftungsanlagen zur Abführ der Abgase. Die Kühlaggregate können auch mit elektrisch angetriebenen Motoren ausgerüstet sein. Das erfordert Kabelanschlüsse für die E-Anlage. In beiden Fällen muß im übrigen die entstehende Kompressoren- und Motorenwärme abgeführt werden. Das erfordert weitere Kühlvorrichtungen, ggf. mit Wasser- oder mit Luftumwälzung. Weiter müssen während der Fahrt des Schiffes sämtliche Container auf die Funktion der Kühlaggregate überwacht werden. Wenn ein Kühlaggregat ausfällt, kann das während der Fahrt des Schiffes mit Bordmitteln praktisch nicht repariert werden.

Das im Oberbegriff des Anspruchs 1 umrissene Kühlgut-Transportsystem ist beispeilsweise aus einer Veröffentlichung in der Fachzeitschrift « Shipping World and Shipbuilder », November 1969, Seiten 1593 bis 1600 bekannt. Es ist davon auszugehen, daß diese Veröffentlichung einerseits ein Kühlgut-Transportsystem unter Verwendung von in einem Frachtschiff auf wenigstens einem Verladedeck staubaren Trailern betrifft, sowie andererseits eine Kühlung des Kühlgutes in den Trailern während des Transports mit Hilfe von Schiffseinrichtungen vorgesehen ist, an die die Trailer angeschlossen werden.

Derartige Kühlgut-Transportsysteme haben den Vorteil, daß Kühlaggregate an den Containern bzw. an den Trailern entfallen. Damit entfallen auch alle notwendigen Vorrichtungen zum Anschluß bzw. zum Betrieb dieser Kühlaggregate. Es entfallen auch die durch Kühlaggregate gebildeten zusätzlichen Wärmequellen innerhalb des Stauraumes der Frachtschiffe und die damit notwendigen weiteren Maßnahmen zum Abführen der Wärme der Kühlaggregate.

Die Trailer werden im beladenen Zustand auf Deck gefahren und festgezurrt. Dann wird die Kühlanlage angeschlossen. Wie dieser Anschluß bei dem aus der Veröffentlichung der Zeitschrift « Shipping World and Shipbuilder » erfolgt, bleibt völlig offen. Es wäre denkbar, daß hierzu Anschlußstutzen oder dergleichen in der Seitenwand des Laderaumes vorgesehen sind, wie dies das Bild links unten auf Seite 1594 dieser Veröffentlichung nahelegt, und daß die gemäß dem Bild auf Seite 1597 in Sechserreihen nebeneinander quer über die Breite des Verladedecks stehenden Trailer mittels geeigneter Schläuche oder dergleichen mit diesen Anschlußstellen verbunden werden.

Hierbei ist jedoch nachteilig, daß derartige lange Schläuche nicht nur umständlich zu handhaben sind, sondern auch im rauhen Betrieb beschädigungsgefährdet sind, was neben Reparaturkosten für den Fall einer zu späten Entdeckung einer solchen Beschädigung die ordnungsgemäße Kühlung des Kühlgutes in Frage stellen würde.

Demgegenüber liegt der Erfindung die Aufgabe zugrunde, ein Kühlgut-Transportsystem der im Oberbegriff des Anspruchs 1 umrissenen Gattung zu schaffen, welches eine schnelle und einfache Be- und Entladung des Frachtschiffes bei möglichst kurzer Unterbrechung der Kühlung und Beschädigungssicherheit der Kühlanschlüsse ermöglicht.

Diese Aufgabe wird durch die kennzeichnenden Merkmale des neuen Anspruchs 1 gelöst.

Dadurch, daß die Kühlluftkanäle unterhalb der Oberfläche des Verladedecks geführt sind und verschließbare Anschlußstellen besitzen, die im wesentlichen in der Fahrbahnebene münden, ist jeder vorbestimmte Stauplatz für einen Trailer mit einem unmittelbar benachbarten Anschluß an das schiffsseitige Kühlluft-System versehen, so daß lange Schläuche oder dergleichen entfallen können. Dabei ist aber dennoch die Befahrbarkeit der Fahrbahnebene nicht beeinträchtigt. Die Trailer werden an den jeweils zugeordneten Stauplatz gefahren und mittels eines geeigneten kurzen Verbindungsstückes an der zugeordneten Anschlußstelle angeschlossen, ohne daß sich eine nennenswerte Unterbrechung der Kühlluftzufuhr ergibt. Durch die doppelwandige Ausbildung der Ladeplattform jedes Trailers steht die Ladeplattform gewissermaßen als wagenseitiger Verteilerkanal für die Kühlluft zur Verfügung, so daß an der Oberfläche der Ladeplattform liegendes Stückgut durch Öffnungen in der Oberseite der Ladeplattform hindurch gut gekühlt werden kann. Es kann jedoch auch ein auf der Ladeplattform abgesetzter Container dadurch gekühlt werden, daß an die Ladeplattform wiederum ein Kanalteil angeschlossen ist, mit dem der Innenraum des Containers von der Anschlußstelle in der Fahrbahnebene aus versorgt werden kann.

Zwar ist es aus der US-A-3 359 752 und der GB-A-1 158 826 bekannt, mehrere Container in einem Schiff nebeneinander oder übereinander gestapelt aufzustellen und über eine zentrale Kühlanlage über Kühlluftkanäle bzw. Versorgungsschächte, die horizontal oder vertikal verlaufen, mit Kühlluft zu versorgen. Dabei handelt es sich jedoch um eine Kühlung von unmittelbar auf eine Stützfläche abgestellten Containern, und nicht um eine Kühlung von Containern oder Stückgut, welches mit Trailern auf das Schiff gefahren, dort gelagert und anschließend ebenso aus dem Schiff abgefahren wird. Daher tritt im Rahmen der bekannten Transportsysteme gemäß diesen Druckschriften schon die zu lösende Aufgabe nicht auf, und ist auch kein Raum zur Anwendung der erfindungsgemäßen Lösungsmerkmale. In allen diesen bekannten Fällen wird, wie ja auch üblich ist, eine zentrale schiffsseitige Kühlanlage über die üblichen frontseitigen Öffnungen unmittelbar an die im Schiff abgestellten Container angeschlossen, erfolgt also der Kühlanschluß gerade nicht bodenseitig unter Zwischenschaltung von zur Abstützung der Container oder des Stückguts vorgesehenen Trailern. Auch soweit im Falle der FR-A-2 393 724 anstelle von Containern Plattformen in das für die Container vorgesehene Schiffsgerüst eingesetzt werden, liegen keine vergleichbaren Verhältnisse vor; denn diese hohlwandigen Plattformen werden einfach an der Stelle in das Schiffsgerüst eingesetzt, an der sonst ein Container mit seiner Bodenwand aufsitzen würde, und in gleicher Weise wie ein dort vorhandener Container von der Stirnseite her mit Kühlluft versorgt. Dies würde jedoch bei dem erfindungsgemäßen Kühlgut-Transportsystem die Verwendung eines Hebezeugs nötig machen, mittels dessen die Trailer in die Führungsgerüste für Container eingesetzt werden müßten, was abgesehen von schwerwiegenden konstruktiven Hindernissen den wesentlichen Vorteil von Trailern, nämlich die dauernde Verfahrbarkeit des Gutes auf dem Trailer und die Möglichkeit, das Gut samt Trailer auf das Schiff fahren und vom Schiff wieder wegfahren zu können, zunichte machen würde.

Bei dem erfindungsgemäßen Kühlgut-Transportsystem kann die Kühlluftführung bzw. die Abluftführung in unterschiedlicher Weise ausgebildet sein. Sie richtet sich einmal nach der Ausbildung der Trailer und zum anderen nach dem zu kühlenden Ladegut. Des weiteren hängt die Ausbildung dieser Kühlanlage von den Gegebenheiten des Frachtschiffes ab.

Eine vorteilhafte, da einfache Ausführungsform besteht darin, daß in den Fahrbahnebenen der Verladedecks außer Kühlluftkanälen auch Abluftkanäle angeordnet sind, die in gleicher Weise wie die Kühlluftkanäle mit nach oben gerichteten verschließbaren Öffnungen versehen sind. Dabei können die Abluftkanäle an die Eingangsseite des Kühlaggregates bzw. eines Wärmetauschers angeschlossen sein. Die Kühlluft wird bei dieser Ausbildung in den Trailer gedrückt und umspült das auf diesem gelagerte Stückgut bzw. wird durch den auf dem Trailer gelagerten Kühlcontainer geführt. Dieses wird weiter unten beschrieben. Die Abluft wird durch die Abluftkanäle abgesaugt und kann zum Kühlaggregat bzw. Wärmetauscher zurückgeführt werden. Eine andere vorteilhafte Ausführungsform besteht darin, daß oberhalb der Stauplätze Abluftkanäle mit von unten her ansaugenden Öffnungen angeordnet sind. Die Abluftkanäle können an das Kühlaggregat bzw. an den Wärmetauscher angeschlossen sein. Diese Bauform ist vorteilhaft für das Kühlen von auf Trailern verladenem Stückgut.

Eine weitere vorteilhafte Ausführungsform besteht in einer Kombination der beiden vorher beschriebenen, wobei in den Abluftkanälen Luftführungsklappen angeordnet sein können, so daß die Abluft entweder oberhalb der Trailer oder unterhalb der Trailer abgesaugt werden kann.

In den beiden vorher beschriebenen Fällen sind die Wände wärmeisoliert. In allen Fällen wird die Luft im Kreislauf geführt, womit Kühlenergie gespart wird.

Auf diese Weise ist es möglich, die Luft entweder durch den gesamten wärmeisolierenden Laderaum oder aber auch nur im Kreislauf zwischen den Anschlußstutzen sowohl der Kühlluftzuleitung als auch der Abluftleitung der einzelnen Kühlcontainer zu führen. Wenn die Kühlluft im geschlossenen Kreislauf durch die Kühlcontainer geführt ist, kann die Wärmeisolierung der Wände des Laderaumes entfallen.

Gemäß einer weiteren vorteilhaften Ausbildung der Erfindung können die Kühlluft- und Abluftkanäle querschiffs verlaufen, wobei sie an einem Wärmetauscher angeschlossen sind, der an der Längswand des Schiffes angeordnet ist, und seinerseits an ein oder mehrere Kühlaggregate angeschlossen sein kann. Die Trailer können in unterschiedlicher Weise ausgebildet sein. Dieses richtet sich nach dem jeweiligen Ladegut, das entweder als Stückgut oder in Containern verladen sein kann. Es ist aber auch möglich, die Kühl- oder auch Abluftkanäle längsschiffs zu führen.

Soweit im wesentlichen nur Stückgut verladen werden soll, kann die Ladeplattform des Trailers wenigstens annähernd über deren ganze Länge doppelwandig ausgebildet sein, wobei die Ladefläche der Ladeplattform zum Austritt der Kühlluft Austrittsöffnungen aufweist, die in einer Mehrzahl über die Ladefläche verteilt angeordnet sind. Die Kühlluft umspült das auf dem Trailer gestapelte Stückgut und wird wie oben beschrieben abgeführt.

Wenn nur Kühlcontainer verladen werden, kann der Trailer an einer Stirnseite der Ladeplattform ein Kanalteil mit wenigstens einer der Austrittsöffnungen für den Zuluftanschluß wenigstens eines auf die Ladeplattform aufgesetzten Kühlcontainers aufweisen.

Eine weitere Bauform der Erfindung, die sowohl für die Beladung mit Stückgut als auch für die Beladung mit Kühlcontainern geeignet ist, besteht aus einer Kombination der vorher beschriebenen Ausführungsform. Der Trailer ist über seine ganze oder nahezu ganze Länge doppelwandig ausgebildet, wobei seine Ladefläche mit mehreren Austrittsöffnungen versehen ist. Außerdem trägt der Trailer an einer Stirnseite, die mit einer nach unten gerichteten Öffnung zum Anschluß an den Kühlluftkanal versehen ist, ein Kanalteil zum Anschluß an die Anschlußöffnung eines oder mehrerer auf den Trailer aufgesetzten Kühlcontainers. Dabei sind.

weiterhin der Innenraum des doppelwandigen Bereiches der Ladeplattform und das an der Stirnseite angeordnete Kanalteil je über eine Luftführungsklappe an der Kühlluft-Eintrittsöffnung angeschlossen. Wenn der Trailer mit Stückgut beladen ist, wird die Luftführungsklappe zum Innenraum des doppelwandigen Bereiches der Ladeplattform geöffnet und die Luftführungsklappe zum Kanalteil für den Container geschlossen. Wenn ein Kühlcontainer verladen ist, ist die Schaltung entgegengesetzt. Die Oberfläche des Trailers kann zur besseren Luftführung bei Stückgutverladung rippenartig ausgebildet sein.

Der Trailer kann gemäß einer weiteren Ausbildung außer mit einem Kanalteil für Kühlcontainer an der gleichen Stirnseite mit einem weiteren Kanalteil zum Anschluß an den Abluftanschluß eines oder mehrerer Kühlcontainer verbunden sein, wobei dieses weitere Kanalteil mit einer nach unten gerichteten Öffnung versehen ist. Zwischen dieser und der nach oben gerichteten Öffnung eines im Verladedeck angeordneten Abluftkanals kann dann ein beidseitig kuppelbares Verbindungsstück eingesetzt werden. Bei dieser Ausführungsform wird die Luft im Kreislauf einmal durch den oder die Container und zum anderen durch den Wärmetauscher geführt. Der Raum um die Container ist nicht in diesen Luftkreislauf eingeschlossen.

Die beiden beschriebenen Anschlüsse des Trailers für Kühlluftzuführung und der Abluftführung eines Containers können zu einem Bauteil vereinigt sein. Die Anschlußbauteile bzw. die vereinigten Bauteile können leicht lösbar am Trailer befestigt sein, so daß sie leicht abnehmbar sind.

Weitere Einzelheiten der Erfindung sind anhand der bezeichneten schematischen Ausführungsbeispiele erläutert, und zwar zeigen

Figur 1 einen teilweisen Querschnitt durch zwei übereinanderliegenden Verladedecks eines Frachtschiffes im Bereich der Kühlluft- und Abluftkanäle in der Ebene A-A nach Fig. 2 ;

Figur 2 einen Längsschnitt in der Ebene B-B nach Fig. 1 ; d. h. längsschiffs ;

Figur 3 eine andere Bauform in der gleichen Schnittebene wie Fig. 1, wobei jedoch die Kühlluft und Abluftkanäle nebeneinanderliegend im Deck angeordnet sind, Schnitt C-C nach Fig. 4 ;

Figur 4 einen Schnitt in der Ebene D-D nach Fig. 3 ;

Figur 5 eine weitere Ausführungsform, die derjenigen nach Fig. 4 entspricht ;

Figur 6 eine Abwandlung der Fig. 5 ;

Figur 7 eine andere Ausführungsform, die derjenigen nach Fig. 3 entspricht ; Schnitt E-E nach Fig. 8 ;

Figur 8 einen Schnitt in der Ebene F-F nach Fig. 7 ;

Figuren 9 und 10 Ausführungsformen nach Fig. 7 und 8, jedoch bei einer anderen Stellung der Luftführungsklappen.

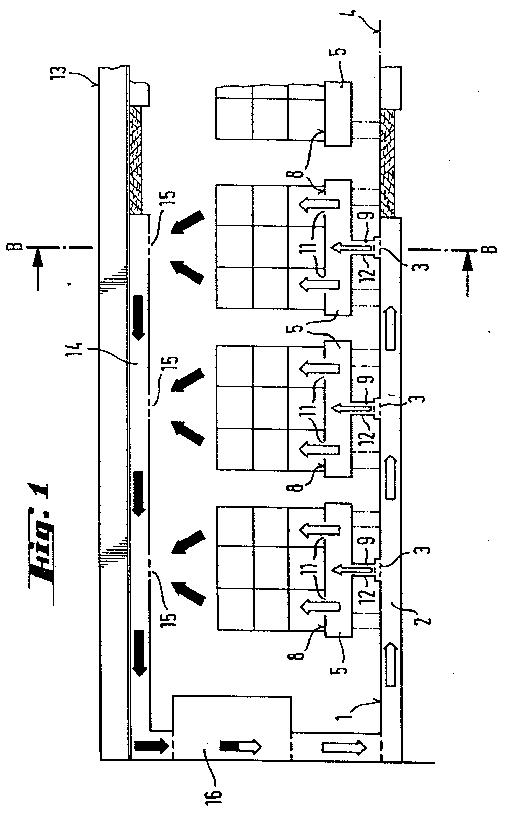

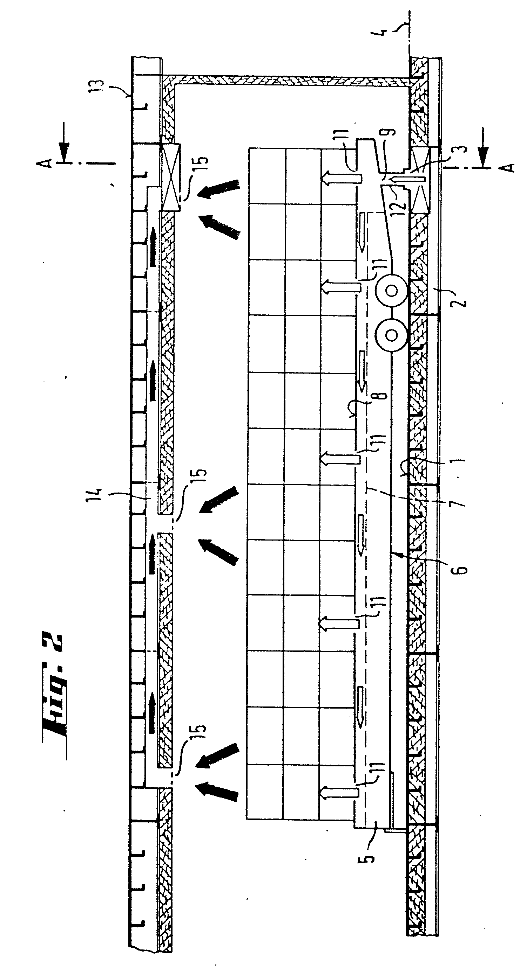

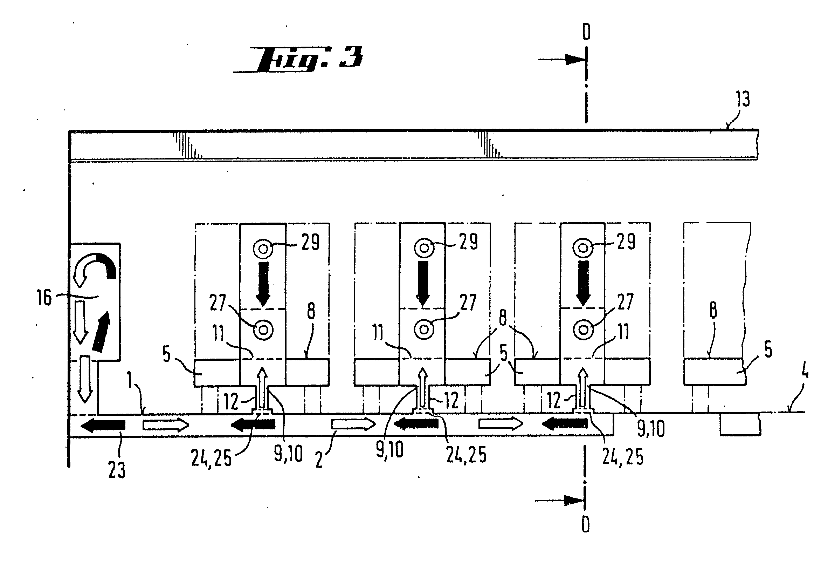

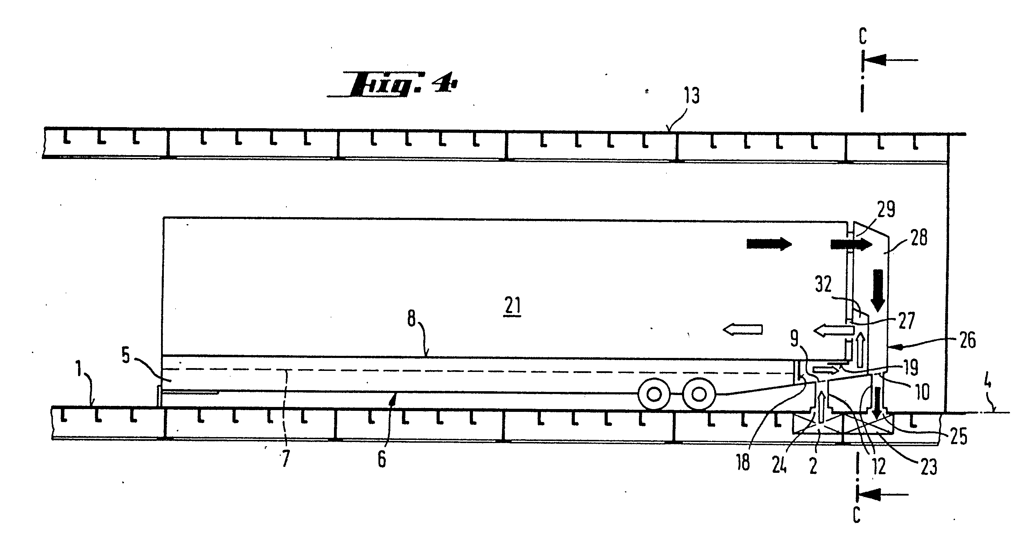

Bei der Ausführungsform nach Fig. 1 und 2 sind in dem Verladedeck 1 querschiffs verlaufende Kühlluftkanäle 2 verlegt, die mit mehreren nach oben gerichteten Anschlußstellen 3 versehen sind. Die Anschlußstellen 3 liegen in einem Abstand von mindestens einer Trailerbreite voneinander. Die Anschlußstellen 3 ragen nicht nennenswert über die Fahrbahnebene 4 hinaus, so daß die Tailer 5 auf dieser Fahrbahnebene 4 ohne weiteres eingefahren werden können. Die Tailer 5 sind doppelwandig ausgebildet, wobei die Ladeplattform 6 den Unterboden 7 und die Ladefläche 8 trägt. Der Unterboden 7 ist mit einer Anschlußöffnung 9 versehen. Die Ladefläche 8 des Trailers 5 ist mit Rippen und mit mehreren zwischen diesen liegenden Austrittsöffnungen 11 versehen. Zwischen Austrittsöffnung 11 und den Anschlußstellen 3 sind kuppelbare Verbindungsstücke 12 einsetzbar. Nach dem Einfahren der Trailer werden die Anschlußöffnungen 9 und 3 miteinander verbunden.

An dem darüberliegenden Verladedeck 13 ist ein Abluftkanal 14 angeordnet, der mit nach unten gerichteten Öffnungen 15 versehen ist. Der Kühlluftkanal 2 und der Abluftkanal 14 sind an die Kühlanlage 16 angeschlossen.

Mit weißem Pfeil ist die Führung der Kühlluft, mit schwarzem Pfeil ist die Führung der Abluft gekennzeichnet. Die Luft wird im Kreislauf geführt, wobei Energie gespart wird.

Fig. 5 zeigt eine Bauform, bei der an dem doppelbödigen Trailer 5 an seiner Stirnseite ein Kanalteil 17 befestigt ist. Oberhalb der Anschlußöffnung 9 ist der Raum im doppelbödigen Trailer 5 durch zwei Luftführungsklappen 18 und 19 unterteilt.

Das Kanalteil 17 ist so ausgebildet, daß seine Austrittsöffnung 20 an die Kühlluftöffnung eines Kühlcontainers 21 in an sich bekannter Weise mit Kupplungsstücken anschließbar ist.

Die Luftführungsklappe 18 wird geschlossen und die Luftführungsklappe 19 geöffnet, so daß die Kühlluft, die durch die Anschlußöffnung 9 zuströmt, ausschließlich durch das Kupplungsstück in den Kühlcontainer 21 eingeführt wird. Die Abluft aus den Containern kann — wie bei der Ausführungsform nach Fig. 1 und 2 — durch Abluftkanäle 14 im Verladedeck abgeleitet werden.

Die Ausführungsform nach Fig. 6 entspricht Fig. 5, wobei jedoch der Trailer mit Stückgut 22 beladen ist. Die Luftführungsklappe 19 wird geschlossen, dagegen ist die Luftführungsklappe 18 geöffnet.

Die Kühlluft strömt nunmehr über die Anschlußöffnung 11 durch das Stückgut in den Laderaum und wird wiederum durch den Abluftkanal 14 zur Kühlanlage 16 zurückgeführt.

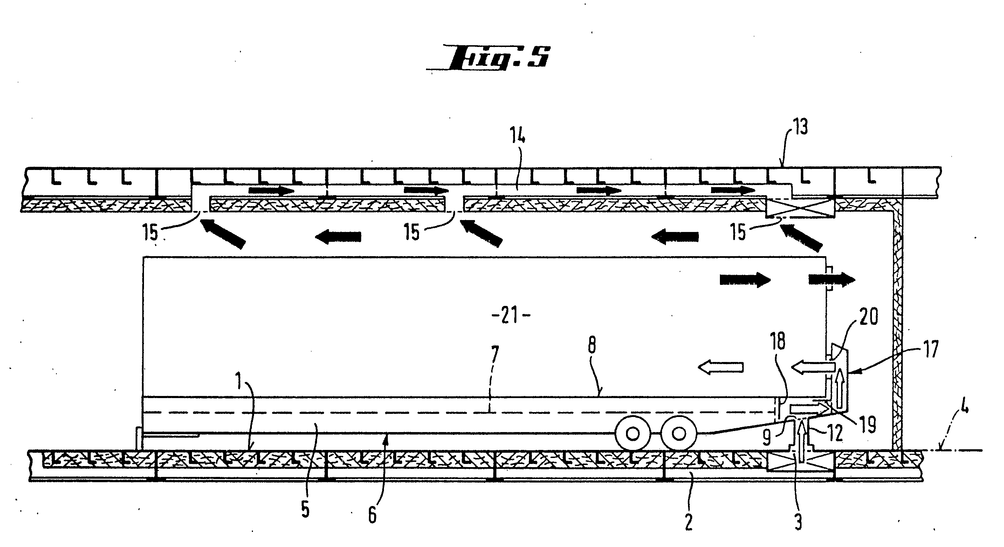

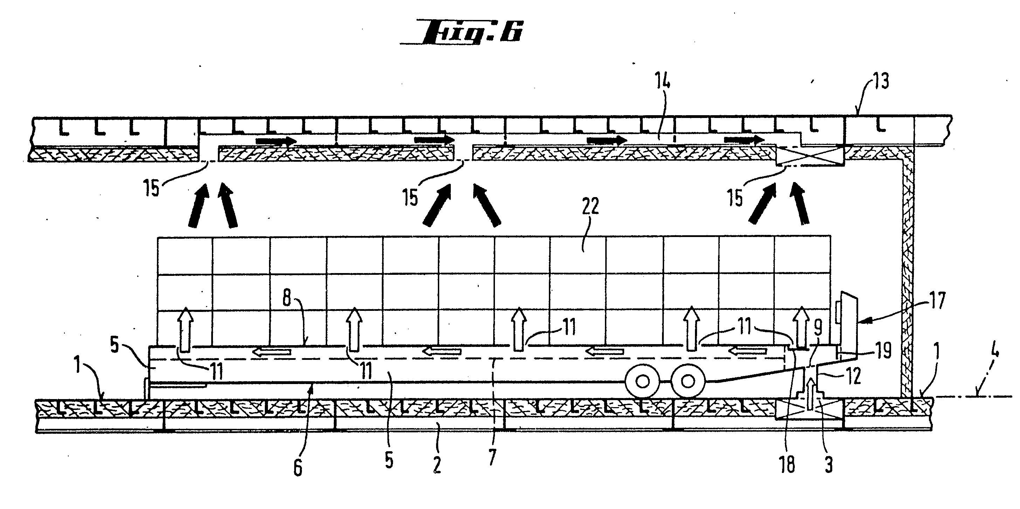

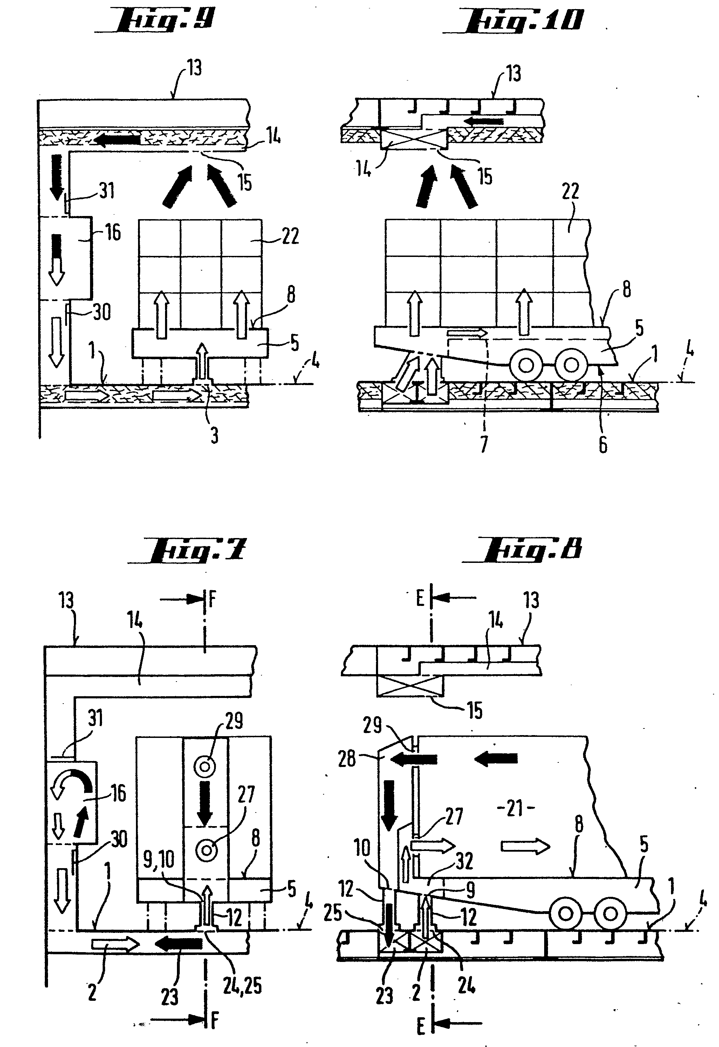

Die Ausführungsform nach Fig. 3 und 4 unterscheidet sich von den vorher beschriebenen einmal dadurch, daß im Verladedeck 1 außer einem Kühlluftkanal 2 auch ein Abluftkanal 23 eingelassen ist. Beide Kanäle sind mit nach oben gerichteten Öffnungen 24 und 25 versehen, die an einem Bauteil 26 mittels kuppelbarer Verbindungsstücke 12 anschließbar sind. Der Bauteil 26 enthält zwei Anschlüsse 27 und 29, wobei der Zuluftanschluß 27 an der Eintrittsöffnung des Kühlcontainers 21 und der Abluftanschluß 29 des Kanalteils 28 an die Abluftöffnung des Kühlcontainers 21 mit an sich bekannten Kupplungsstücken anschließbar sind.

Der Kanalteil 17 mit dem Zuluftanschluß 27 und der Kanalteil 28 mit dem Abluftanschluß 29 können zu einem Bauteil 26 vereinigt sein. Dieser Bauteil 26 kann auch leicht lösbar und damit abnehmbar am Trailer 5 befestigt sein, so daß der Trailer 5 jetzt für Stückgutbeladung verwendet werden kann.

Die Abluftkanäle 2 und 23 sind an einem Wärmetauscher der Kühlanlage 16 angeschlossen, der an einer Längswand des Schiffes befestigt ist.

Bei der Ausführungsform nach Fig. 7 und 8 sind sowohl im Verladedeck als auch im Verladedeck 13 Abluftkanäle 14 und 23 angeschlossen. Beide Abluftkanäle 14, 23 führen zur Kühlanlage 16. Dessen Luftführungsklappen 30, 31 sind bei Fig. 7 dargestellt. Der Abluftkanal 23 ist über der Luftführungsklappe 30 und der Abluftkanal 14 über die Luftführungsklappe 31 an den Wärmetauscher der Kühlanlage 16 angeschlossen ist.

Bei der Ausführungsform nach Fig. 7 und 8 sind die Luftführungsklappen 30, 31 so gestellt, daß die Kühl- und Abluft nur durch die Abluftkanäle 2, 23 geleitet wird, die im Verladedeck 1 liegen. So ist ein Kühlcontainer 21 angeschlossen.

Bei der Ausführungsform nach Fig. 9 und 10 können die Luftführungsklappen 30 und 31 so gesteuert sein, daß die Abluft nur durch den Abluftkanal zurückgeführt wird.

Die Ausführungsform nach Fig. 9 und 10 zeigt einen mit Stückgut beladenen Trailer 5.

**Ansprüche**

1. Kühlgut-Transportsystem unter Verwendung von in einem Frachtschiff auf wenigstens einem Verladedeck (1) staubaren Trailern (5) mit einer fahrbaren, an ein Zugfahrzeug ankuppelbaren sowie abgekuppelt vom Zugfahrzeug abstellbaren Ladeplattform (6) für das Kühlgut, das durch eine im Frachtschiff vorgesehene zentrale Kühlanlage (16) zur Erzeugung von Kühlluft kühlbar ist, wobei die Oberfläche des Verladedecks (1) für die Trailer (5) als Fahrbahnebene (4) ausgebildet ist, dadurch gekennzeichnet, daß

a) unterhalb der Oberfläche des Verladedecks (1) Kühlluftkanäle (2) verlegt sind,

b) an den Trailerstauplätzen von den Kühlluftkanälen (2) ausgehende verschließbare Anschlußstellen (3) angeordnet sind, die nicht oder nicht wesentlich über die Fahrbahnebene (4) hinausgehen,

c) in die Anschlußstellen (3) zum Anschluß der Trailer (5) beidseitig kuppelbare Verbindungsstücke (12) einsetzbar sind,

d) die Ladeplattform (6) des Trailers (5) ganz oder teilweise doppelwandig ausgebildet ist, und

e) die Ladeplattform (6) mindestens eine nach unten gerichtete Anschlußöffnung (9) für Kühlluftzufuhr sowie wenigstens eine nach oben gerichtete Austrittsöffnung (11) zur Kühlluftzufuhr zum Kühlgut aufweist.

2. Trailer (5) zum Transport und zur Lagerung von Kühlgut, mit einer fahrbaren, an ein Zugfahrzeug ankuppelbaren sowie abgekuppelt vom Zugfahrzeug abstellbaren Ladeplattform (6) für das Kühlgut, zur Verwendung in einem Transportsystem gemäß Anspruch 1, dadurch gekennzeichnet, daß die Ladeplattform (6) wenigstens teilweise doppelwandig ausgebildet ist und eine im Bereich ihrer Unterseite vorgesehene Anschlußöffnung (9) für Kühlluftzufuhr zur Ladeplattform (6) sowie wenigstens eine im Bereich ihrer Oberseite vorgesehene Austrittsöffnung (11) zur Kühlluftzufuhr zum Kühlgut aufweist, derart, daß bei der Anschlußöffnung (9) eingeführte Kühlluft zunächst den doppelwandigen Bereich der Ladeplattform (6) durchströmt und sodann nach Austritt aus der Austrittsöffnung (11) das Kühlgut beaufschlagt.

3. Trailer (5) nach Anspruch 2, dadurch gekennzeichnet, daß der doppelwandige Bereich der Ladeplattform (6) wenigstens annähernd über deren ganze Länge reicht, und daß die Austrittsöffnungen (11) in einer Mehrzahl über die Ladefläche (8) verteilt angeordnet sind.

4. Trailer (5) nach Anspruch 2 oder 3, dadurch gekennzeichnet, daß an einer Stirnseite der Ladeplattform (6) ein Kanalteil (17) mit wenigstens einer der Austrittsöffnungen (20) für den Zuluftanschluß (27) wenigstens eines auf die Ladeplattform (6) aufgesetzten Kühlcontainers (21) vorgesehen ist.

5. Trailer (5) nach Anspruch 4, dadurch gekennzeichnet, daß an der das Kanalteil (17) aufweisenden Stirnseite der Ladeplattform (6) ein weiterer Kanalteil (28) mit wenigstens einer Eintrittsöffnung für den Abluftanschluß (29) wenigstens eines auf die Ladeplattform (6) aufgesetzten Kühlcontainers (21) vorgesehen ist.

6. Trailer (5) nach den Ansprüchen 4 und 5, dadurch gekennzeichnet, daß die beiden Kanalteile (17 ; 28) zu einem einzigen Bauteil (26) vereinigt sind.

7. Trailer (5) nach einem der Ansprüche 4 bis 6, dadurch gekennzeichnet, daß die Kanalteile (17 ; 28) bzw. das aus diesen gebildete Bauteil (26) von der Ladeplattform (6) abnehmbar gehalten sind.

8. Trailer (5) nach den Ansprüchen 3 und 4, dadurch gekennzeichnet, daß eine Strömungsverbindung zwischen dem doppelwandigen Bereich der Ladeplattform (6) und dem Kanalteil (17) beispielsweise durch wenigstens eine Luftführungsklappe (18 bzw. 19) abschließbar ist, derart, daß die Kühlluft aus der Ladeplattform (6) selektiv zu den Austrittsöffnungen (11) der Ladefläche (8) oder der Austrittsöffnung (20) des Kanalteils (18) gelangt.

9. Frachtschiff mit auf Verladedecks (1) angeordneten Stauplätzen für Ladeeinheiten für Kühlgut, mit wenigstens einer schiffsseitigen Kühlanlage (16) sowie Kühlluftkanälen (2) zur Kühlung des Kühlgutes und mit kuppelbaren Verbindungsstücken (12) zum Anschluß je einer Ladeeinheit an die Kühlluftkanäle (2), zur Verwendung bei einem Kühlgut-Transportsystem nach Anspruch 1, gekennzeichnet durch die Ausbildung der Oberfläche des Verladedecks (1) als Fahrbahnebene (4) für Trailer (5), durch eine Anordnung der Kühlluftkanäle (2) unterhalb der Oberfläche des Verladedecks (1), sowie durch die Merkmale (b) und (c) des Anspruchs 1.

10. Frachtschiff nach Anspruch 9, dadurch gekennzeichnet, daß unterhalb der Fahrbahnebene (4) der Verladedecks (1) auch Abluftkanäle (23) angeordnet sind, die ebenfalls mit nach oben gerichteten verschließbaren Öffnungen (3) zum Anschluß kuppelbarer Verbindungsstücke (12) versehen sind.

11. Frachtschiff nach Anspruch 9 oder 10, dadurch gekennzeichnet, daß oberhalb der Stauplätze Abluftkanäle (14) mit von unten her ansaugenden Öffnungen (15) angeordnet sind.

12. Frachtschiff nach Anspruch 10 oder 11, dadurch gekennzeichnet, daß in den Abluftkanälen (14 ; 23) Luftführungsklappen (30 bzw. 31) angeordnet sind.

13. Frachtschiff nach einem der Ansprüche 9 bis 12, dadurch gekennzeichnet, daß die Kühlluft- (2) und Abluftkanäle (14 ; 22) querschiffs verlaufen und an der der Längswand des Schiffes angeordnete Wärmetauscher der Kühlanlage (16) angeschlossen sind, wobei die Wärmetauscher ihrerseits an ein oder mehrere Kühlaggregate angeschlossen sind.

## Claims

1. A refrigerated transport system using stowable trailers (5) on at least one loading deck (1) of a cargo ship with a travelling, shuntable loading platform (6) for the refrigerated wares which can be coupled to and uncoupled from a traction unit, which can be refrigerated by a central refrigerating plant (16) in the cargo vessel for producing chilled air, in which the floor of the loading deck (1) for the trailer (5) is formed as a road surface (4), characterised in that

a) beneath the floor of the loading deck (1) are laid cooling air ducts (2)

b) at the trailer stowing positions are arranged closable connection points (3) from the cooling air ducts (2), which connection points do not project, or do not project substantially, above the road surface

c) two-way connecting pieces (12) are insertable at the connection points (3) for connecting the trailer (5).

d) the loading platform (6) of the trailer (5) is formed partly or completely double walled, and

e) the loading platform (6) has at least one downwardly directed connection port (9) for feeding chilled air as well as at least one upwardly directed outlet port for directing chilled air to the refrigerated wares.

2. A trailer (5) for transport and storage of refrigerated wares with a travelling, shuntable loading platform (6) for the refrigerated wares which can be coupled to and uncoupled from a towing vehicle, for use in a transport system according to claim 1, characterised in that the loading platform (6) is formed at least partially with a double wall and in its lower region has connection ports (9) for feeding chilled air to the loading platform (6) and at least one outlet port (11) in the region of its upper side for supplying chilled air to the refrigerated wares, such that from the connection ports (9) chilled air first passes through the double walled region of the loading platform (6) and encounters the refrigerated wares when it leaves from the outlet part (11).

3. A trailer (5) according to claim 2, characterised in that the double walled region of the loading platform (6) extends at least substantially over its whole length, and that the outlet ports (11) are distributed over the loading surface (8).

4. A trailer (5) according to claim 2 or 3, characterised in that at one end of the loading platform (6) is provided a channel part (17) with at least one of the outlet ports (20) for the air supply connection (27) of at least one refrigerated container standing on the loading platform.

5. A trailer (5) according to claim 4, characterised in that on the end of the loading platform (6) having the channel part (17) is provided a further channel part (28) with at least one inlet port for the air outlet connection (29) of at least one refrigerated container (21) standing on the loading platform (6).

6. A trailer (5) according to claims 4 and 5, characterised in that the two channel parts (17 ; 28) are combined in a single constructional element (26).

7. A trailer (5) according to one of claims 4 to 6, characterised in that the channel parts (17 ; 28) and the constructional part (26) comprising them are removably attached to the loading platform (6).

8. A trailer according to claims 3 and 4, characterised in that an air connection between the double wall region of the loading platform (6) and the channel part (17) is disconnectable for example by means of at least one air supply valve (18 or 19), so that the chilled air flows from the loading platform selctively to the outlet ports (11) of the loading surface (8) or the outlet ports (20) of the channel part (18).

9. A cargo vessel with stowing positions for containers for refrigerated wares arranged on a loading deck (1), with at least one ship-board refrigerating plant (16) and chilled air channels (2) for refrigerating the refrigerated wares and with connecting members (12) to connect each container to the chilled air channels (2), for use in a refrigerated transport system according to claim 1, characterised by the construction of the floor of the loading deck (1) as a road surface (4) for trailers (5), by an arrangement of chilled air channels (2) beneath the floor of the loading deck (1), and also by the features (b) and (c) of claim 1.

10. A cargo vessel according to claim 9, characterised in that beneath the road surface (4) of the loading deck (1) are also arranged outlet channels (23) which are likewise provided with closable upwardly directed openings (3) for coupling connecting members (12).

11. A cargo vessel according to claim 9 to 10, characterised in that above the stowing positions are arranged air outlet channels (14) with downwardly directed inlet openings (15).

12. A cargo vessel according to claim 10 or 11, characterised in that in the air outlet channels (14 ; 23) are arranged air supply valves (30 or 31).

13. A cargo vessel according to one of claims 9 to 12, characterised in that the chilled air and air outlet channels (14 ; 22) ran athwartships and are connected to heat exchangers of the refrigerating plant (16) on the side of the vessel, the heat exchangers being connected in turn to one or more cooling assemblies.

## Revendications

1. Système de transport de produits réfrigérés utilisant des remorques (5) pouvant être stationnées dans un navire de charge sur au moins un pont de charge (1), comprenant une plate-forme de charge (6) pour les produits réfrigérés, mobile, pouvant être attelée à un véhicule tracteur et pouvant être stationnée dételée du véhicule tracteur, les produits réfrigérés pouvant être réfrigérés par une installation de réfrigération (16) centrale prévue dans le navire de charge et destinée à produire de l'air de réfrigération, la surface du pont de charge (1) pour les remorques (5) étant réalisée sous la forme d'un plan de circulation (4), caractérisé en ce que :

a) des gaines d'air de réfrigération (2) sont agencées sous la surface du pont de charge (1),

b) aux emplacements de stationnement des remorques sont agencés des postes de raccordement obturables (3) qui partent des gaines d'air froid (2) et qui ne font pas saillie ou ne font pas sensiblement saillie au-dessus du plan de circulation (4),

c) des organes de raccordement (12) pouvant être accouplés des deux côtés peuvent être engagés dans les postes de raccordement (3) pour le raccordement des remorques (5),

d) la plate-forme de charge (6) de la remorque (5) est entièrement ou partiellement constituée à double paroi et

e) la plate-forme de charge (6) présente au moins une ouverture de raccordement (9) dirigée vers le bas (pour l'acheminement d'air froid) ainsi qu'au moins une ouverture de sortie (11) dirigée vers le haut pour l'envoi de l'air de réfrigération aux produits réfrigérés.

2. Remorque (5) pour le transport et l'entreposage de produits réfrigérés, comprenant une plate-forme de charge (6) mobile pour les produits réfrigérés qui peut être attelée à un véhicule tracteur et peut être stationnée dételée du véhicule tracteur, destinée à être utilisée dans un système de transport suivant la revendication 1, caractérisée en ce que la plate-forme de charge (6) est réalisée au moins partiellement à double paroi et présente une ouverture de raccordement (9) pour l'acheminement de l'air de réfrigération à la plate-forme de charge (6) qui est prévue dans la région de sa face inférieure, ainsi qu'au moins une ouverture (11) de sortie pour l'acheminement de l'air de réfrigération aux produits réfrigérés, prévue dans la région de sa face supérieure, de sorte que, lorsque de l'air de réfrigération est acheminé à l'ouverture de raccordement (9), cet air de réfrigération parcourt tout d'abord la région à double paroi de la plate-forme de charge (6) puis agit sur les produits réfrigérés après être sorti par l'ouverture de sortie (11).

3. Remorque (5) suivant la revendication 2, caractérisée en ce que la région à double paroi de la plate-forme de charge (6) s'étend au moins approximativement sur toute sa longueur et en ce que des ouvertures de sortie (11) sont réparties en un grand nombre sur la surface de charge (8).

4. Remorque (5) suivant l'une des revendications 2 et 3, caractérisée en ce qu'à un côté frontal de la plate-forme de charge (6) est prévue une partie de gaine (17) munie d'au moins l'une des ouvertures de sortie (20) pour le raccordement d'arrivée d'air (27) d'au moins un conteneur réfrigéré (21) posé sur la plate-forme de charge (6).

5. Remorque (5) suivant la revendication 4, caractérisée en ce qu'au côté frontal de la plate-forme de charge (6) qui présente la partie de gaine (17) est prévue une autre partie de gaine (28) munie d'au moins une ouverture d'entrée pour le raccordement d'air usé (29) d'au moins un conteneur réfrigéré (21) posé sur la plate-forme de charge (6).

6. Remorque (5) suivant les revendications 4 et 5, caractérisée en ce que les deux parties de gaine (17, 18) sont réunies en un seul élément (26).

7. Remorque (5) suivant l'une des revendications 4 à 6, caractérisée en ce que les parties de gaine (17 ; 28) ou l'élément (26) composé de ces parties de gaine sont montées de façon à pouvoir être séparées de la plate-forme de charge (6).

8. Remorque (5) suivant les revendications 3 et 4, caractérisée en ce qu'une liaison d'écoulement entre la région à double paroi de la plate-forme de charge (6) et la partie de gaine (17) peut être fermée, par exemple par au moins un clapet de conduite d'air (18 ou 19) de telle manière que l'air de réfrigération parvienne sélectivement de la plate-forme de charge (6) aux ouvertures d'entrée (11) de la surface de charge (8) ou à l'ouverture de sortie (20) de la partie de gaine (18).

9. Navire de charge comportant des emplacements de stationnement disposés sur un pont de charge (1) pour des unités de charge transportant des produits réfrigérés, comportant au moins une installation de réfrigération (7) appartenant au navire ainsi que des gaines d'air de réfrigération (2) destinées au refroidissement des produits réfrigérés et des pièces de liaison (12) pouvant être accouplées et destinées à raccorder chacune une unité de charge aux gaines d'air de réfrigération (2), destiné à être utilisé dans un système de transport de produits réfrigérés suivant la revendication 1, caractérisé par le fait que la surface du pont de charge (1) est réalisée sous la forme d'un plan de circulation (4) pour les remorques (5), par la disposition des gaines d'air de réfrigération (2) au-dessous de la surface du pont de charge (1), ainsi que par les caractéristiques (b) et (c) de la revendication 1.

10. Navire de charge suivant la revendication 9, caractérisé en ce que, au-dessous du plan de circulation (4) du pont de charge (1) sont également agencées des gaines (23) d'air usé qui sont également munies d'ouvertures obturables (3) dirigées vers le haut, pour le raccordement de pièces de liaison accouplables (12).

11. Navire de charge suivant la revendication 9 ou 10, caractérisé en ce que, au-dessus des emplacements de stationnement, sont disposées des gaines d'air usé (14) munies d'ouvertures (15) qui aspirent à partir du bas.

12. Navire de charge suivant la revendication 10 ou 11 caractérisé en ce que, dans les gaines d'air usé (14 ; 23) sont disposés des clapets (30, 31) de guidage de l'air.

13. Navire de charge suivant l'une des revendications 9 à 12, caractérisé en ce que les gaines d'air de réfrigération (2) et d'air usé (14 ; 22) s'étendent transversalement au navire et sont raccordées à des échangeurs de chaleur de l'installation de réfrigération (16) qui sont agencés le long de la paroi longitudinale du navire, les échangeurs de chaleur étant de leur côté raccordés à un ou plusieurs groupes de réfrigération.

Fig. 1

0 018 661

*Fig. 2*

Fig. 3

0 018 661

_Fig. 4_

**Fig. 5**

**Fig. 6**

**0 018 661**

# Fig. 9

# Fig. 10

# Fig. 7

# Fig. 8

7